# FASCICULE DE BREVET EUROPEEN

(11) **EP 1 998 172 B1**
(45) Date de publication et mention de la délivrance du brevet: **13.05.2015**
(21) Numéro de dépôt: 08156762.0
(22) Date de dépôt: 22.05.2008
(51) Int. Cl.: G01N 27/90

(54) **Repérage de points d'intérêt sur une zone de la surface d'une pièce et application à l'optimisation de la trajectoire et de l'angulation des sondes à courants de Foucault**
Ortung von relevanten Stellen auf einem Oberflächenbereich eines Werkstücks und Anwendung zur Optimierung der Bewegungskurve und der Neigung der Wirbelstromsonden
Marking of points of interest on the surface of a workpiece and application to optimising the trajectory and angulation of eddy current probes

(30) Priorité: 30.05.2007 FR 0755348
(43) Date de publication de la demande: 03.12.2008
(73) Titulaire: Snecma, 75015 Paris (FR)
(72) Inventeur: Cheynet, Sandra, Carole, Angèle, 91220 Le Plessis-Pâté (FR)
(74) Mandataire: Ilgart, Jean-Christophe

(56) Documents cités:
- FR-A- 2 557 711
- US-A- 3 736 543
- US-A- 5 418 457
- US-A1- 2003 076 310
- US-B1- 6 624 510

## Description

### DOMAINE TECHNIQUE

L'invention se rapporte au repérage de points d'intérêt sur une zone de la surface d'une pièce. Un tel repérage de points d'intérêt peut être avantageusement utilisé dans le domaine du contrôle non destructif. Il permet notamment l'optimisation de la trajectoire et de l'angulation d'une sonde à courants de Foucault balayant une zone d'une pièce à contrôler.

### ÉTAT DE LA TECHNIQUE ANTÉRIEURE

Le contrôle par courants de Foucault est une méthode de contrôle non destructif de pièces en matériau électriquement conducteur. Le contrôle est effectué au moyen d'une sonde qui comprend une bobine électrique parcourue par un courant sinusoïdal. Lorsque la sonde, traversée par un courant sinusoïdal, est placée à proximité d'une pièce en matériau conducteur, le champ magnétique variable produit par la bobine induit des courants de Foucault dans la pièce. Ces courants de Foucault créent à leur tour un champ magnétique et il existe alors un couplage magnétique entre la sonde et la pièce à contrôler, ce qui modifie l'impédance de la bobine. En déplaçant la sonde sur la surface de la pièce à contrôler, il est possible de détecter des défauts dans la pièce (fissures, inhomogénéités, changements de conductibilité, variations de géométrie, etc...) par variation du couplage magnétique entre la sonde et la pièce à contrôler, ce qui se traduit par une variation de l'impédance de la bobine.

L'angulation de la sonde par rapport à la surface de la pièce à contrôler fait varier l'amplitude du signal de détection de la même façon que l'éloignement de la sonde par rapport à la pièce. La sonde doit donc balayer orthogonalement la surface de la pièce à contrôler pour que l'intensité des courants induits dans la pièce soit identique et optimale tout au long du contrôle.

Le contrôle non destructif par courants de Foucault de pièces électriquement conductrices peut être mis en oeuvre sur des machines automatiques, surtout pour le contrôle des surfaces internes de pièces creuses utilisées dans le domaine de l'aéronautique. Ces machines automatiques nécessitent la mise au point de trajectoires de balayage des surfaces à contrôler. Ceci pose à ce jour de nombreuses difficultés tenant à la délimitation de la zone à contrôler et à la vérification de l'angulation de la sonde tout au long du balayage. Pour tenter de pallier à ces difficultés, les programmations sont souvent effectuées sur des zones surdimensionnées de manière à garantir des recouvrements. Il en résulte une perte de temps et une usure prématurée des sondes.

En principe, le positionnement optimal de la sonde peut être contrôlé en visualisant le « lift-off », c'est-à-dire le décollement de la sonde par rapport à la surface à contrôler. Cependant, cette technique est impossible à appliquer dans le cadre de machines automatiques lorsque l'on met en oeuvre des sondes de type différentiel ou si on utilise des filtres.

Il est aussi possible de contrôler le positionnement optimal de la sonde par visualisation à l'aide de systèmes endoscopiques. Le positionnement optimal de la sonde peut aussi être contrôlé en utilisant des pièces rebutées avec des défauts artificiels dans la zone à contrôler ou en utilisant des pièces rebutées avec des découpes permettant de visualiser la zone à contrôler. Toutes ces méthodes sont coûteuses et rarement à la disposition des programmeurs.

### EXPOSÉ DE L'INVENTION

La présente invention permet de remédier aux inconvénients présentés par l'art antérieur. Elle est basée sur le repérage de points d'intérêt sur une zone de la surface d'une pièce grâce à un témoin surfacique et au moyen d'une sonde à courants de Foucault. L'invention trouve une application particulièrement intéressante dans le contrôle de certaines zones de pièces métalliques au moyen d'une sonde à courants de Foucault. On peut ainsi repérer des points d'intérêt compris dans une zone d'une pièce métallique exempte de défauts et contrôler une zone identique d'une autre pièce métallique sur la base des points d'intérêt repérés. Cependant, le repérage de points d'intérêt d'une zone peut être utilisé pour d'autres applications.

L'invention est basée sur l'utilisation d'un témoin surfacique destiné au repérage de points d'intérêt sur une zone de la surface d'une pièce, constitué d'une couche mince et souple, apte à se conformer à ladite zone pour une mise en contact intime, la couche mince supportant des traces en matériau électriquement conducteur, le matériau de la couche mince, le matériau des traces, la géométrie et la répartition des traces étant choisis pour que, lorsque le témoin surfacique est en contact intime avec ladite zone, le passage d'une sonde à courants de Foucault sur une trace fournisse un signal significatif et représentatif de la trace.

Le matériau de la couche mince peut être en matériau isolant tel qu'un polymère fluoré, par exemple choisi parmi le polytétrafluoroéthylène (PTFE), le polymère de perfluoroalkoxy (PFA) et l'éthylène-propylène fluoré (FEP).

Si le témoin surfacique est destiné au repérage de points d'intérêt sur une zone électriquement conductrice de la surface de la pièce (une pièce métallique ou une pièce en matériau composite électriquement conducteur par exemple), le matériau des traces est avantageusement choisi pour avoir une conductivité électrique supérieure d'au moins 20 MS à celle de ladite zone.

Le matériau des traces peut être choisi parmi l'or, le cuivre et l'argent.

Avantageusement, les traces sont constituées de lignes. Ces lignes peuvent être parallèles entre elles. Elles aussi peuvent former un quadrillage.

La couche mince peut être pourvue d'un adhésif pour une mise en contact intime avec ladite zone.

Un premier objet de l'invention concerne un procédé de repérage de points d'intérêt sur une zone de la surface d'une pièce, comprenant la mise en contact intime sur ladite zone d'un témoin surfacique tel que défini ci-dessus, le procédé comprenant également le passage de la sonde à courants de Foucault sur le témoin surfacique et le relevé des signaux représentatifs des traces et fournis par la sonde, ces signaux représentatifs correspondant à des points d'intérêt ainsi repérés sur ladite zone.

Un deuxième objet de l'invention concerne un procédé de mise en place d'un test de contrôle automatique d'une zone de la surface de pièces métalliques identiques au moyen d'une sonde à courants de Foucault, le procédé comprenant :
- le repérage, par le procédé de repérage ci-dessus, de points d'intérêt sur une zone de la surface d'une pièce métallique étalon, identique à la zone de surface des pièces métalliques à contrôler et exempte de défauts, les points d'intérêt repérés permettant à la sonde à courants de Foucault de balayer toute la zone de la pièce métallique étalon,
- l'enregistrement de la position des points d'intérêt repérés sur la zone de la surface de la pièce métallique étalon afin de pouvoir procéder au contrôle automatique, au moyen d'une sonde à courants de Foucault, d'une pièce métallique identique à contrôler par répétition du balayage réalisé sur la zone de la pièce métallique étalon.

Le repérage de points d'intérêt peut alors comprendre le repérage de points de début de zone et de points de fin de zone pour déterminer la trajectoire d'une sonde à courants de Foucault devant balayer toute la zone.

Ce procédé peut aussi comprendre l'enregistrement, pour chaque point d'intérêt repéré sur la zone de la surface de la pièce métallique étalon, de la position angulaire de la sonde pour laquelle le signal fourni par la sonde est optimal.

L'invention s'applique notamment au contrôle non destructif de pièces en matériau électriquement conducteur, en particulier aux pièces d'appareils aéronautiques.

### BRÈVE DESCRIPTION DES DESSINS

L'invention sera mieux comprise et d'autres avantages et particularités apparaîtront à la lecture de la description qui va suivre, donnée à titre d'exemple non limitatif, accompagnée des dessins annexés parmi lesquels :
- la figure 1 est une vue en perspective d'un témoin surfacique selon l'invention,
- la figure 2 est illustrative du procédé de mise en place d'un test de contrôle automatique d'une zone de surface d'une pièce métallique au moyen d'une sonde à courants de Foucault, selon l'invention,
- la figure 3 est illustrative de l'application du procédé de contrôle mis en place selon la présente invention.

### EXPOSÉ DÉTAILLÉ DE MODES DE RÉAILISATION PARTICULIERS

La partie de la description qui suit va porter, uniquement à titre d'exemple, sur le repérage de points d'intérêt sur une zone de la surface d'une pièce métallique destinée à un appareil aéronautique.

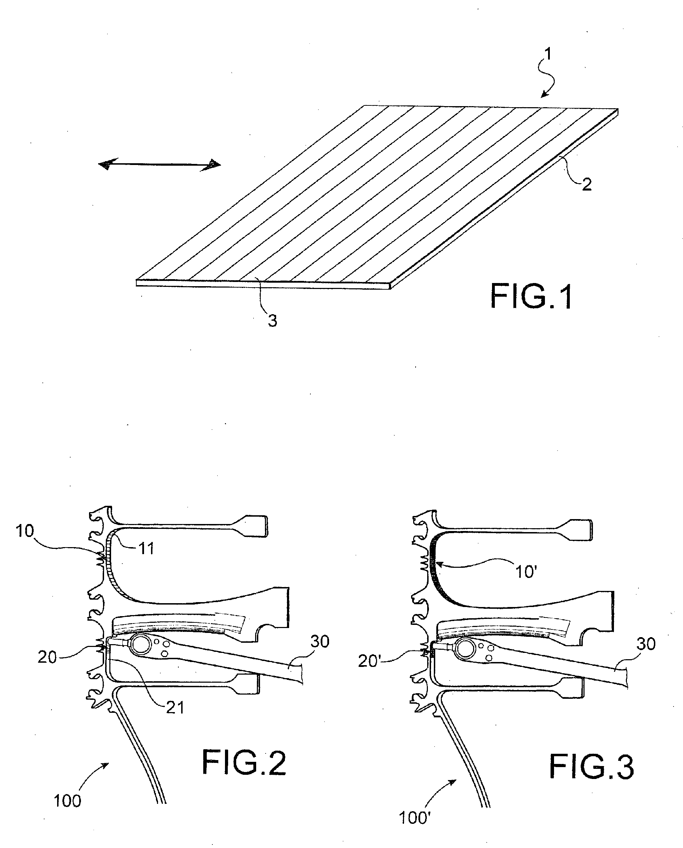

La figure 1 est une vue en perspective d'un témoin surfacique 1 selon la présente invention. Le témoin surfacique 1 est constitué à partir d'une couche mince ou substrat 2 de faible épaisseur (0,1 mm par exemple). Le substrat 2 doit être suffisamment fin et d'épaisseur uniforme pour éviter les problèmes d'entrefer. Il doit être suffisamment souple pour pouvoir s'adapter au profil de la pièce à laquelle il est destiné. Les produits commercialisés sous la marque Teflon^{®} conviennent tout à fait. On peut citer le polytétrafluoroéthylène (PTFE), le polymère de perfluoroalkoxy (PFA) et l'éthylène-propylène fluoré (FEP). La face du substrat 2 à mettre en contact avec la pièce métallique est avantageusement auto-collante et repositionnelle. Il est avantageux que le témoin surfacique puisse être, après usage, décollé de la pièce sans y laisser de traces. Il est aussi avantageux qu'il puisse être réutilisé.

Sur la face du substrat 2 opposée à la face à mettre en contact avec la pièce métallique, on forme des lignes électriquement conductrices 3. Sur l'exemple de réalisation de la figure 3, les lignes conductrices 3 sont droites, parallèles entre elles et régulièrement espacées. Cependant, ces lignes pourraient être courbes. Elles pourraient aussi être irrégulièrement espacées. Les lignes conductrices 3 peuvent être réparties à un pas d'environ 3 mm sur le substrat 2. Le pas est à adapter en fonction de la dimension de la zone active de la sonde à courants de Foucault. Un pas de 3 mm est approprié à une zone active de sonde de 2 mm afin d'éviter les interférences entre les lignes conductrices.

Les lignes conductrices 3 peuvent être réalisées de différentes manières. Parmi les possibilités de réalisation de ces lignes, on peut citer l'utilisation d'une sorte de pochoir permettant soit de réaliser un dépôt d'or (procédé PVD), soit d'appliquer de la laque d'argent, l'utilisation de fils de cuivre très fins, l'utilisation du procédé de formation de lignes de cuivre utilisé pour les circuits imprimés souples, l'utilisation de la sérigraphie argent, l'utilisation d'encres conductrices. Les lignes conductrices 3 peuvent être de différentes largeurs (par exemple de 0,1 à 0,3 mm). Leur épaisseur doit être faible (par exemple 0,05 mm) pour éviter les problèmes d'entrefer (éloignement de la sonde par rapport à la surface sondée). Le choix du matériau des lignes conductrices est, dans cet exemple d'application, directement lié à la matière de la pièce métallique recevant le témoin surfacique. En effet, pour générer des signaux à base de courants de Foucault significatifs, il faut choisir un matériau de lignes conductrices de conductivité électrique très différente de celle de la pièce métallique. De très bons résultats peuvent être obtenus avec une conductivité des lignes supérieure d'au moins 20 MS (méga-siemens) à celle de la pièce métallique. A titre d'exemple, pour une pièce en titane, les lignes conductrices peuvent être en cuivre.

La figure 2 est illustrative du procédé de mise en place d'un test de contrôle automatique d'une zone de surface d'une pièce métallique au moyen d'une sonde à courants de Foucault et d'un témoin surfacique selon l'invention.

La mise en place du test de contrôle automatique se fait en mettant en contact intime le témoin surfacique de la figure 1 sur une zone d'une pièce métallique étalon, c'est-à-dire sans défauts, ladite pièce métallique étalon étant identique aux pièces qu'il faudra contrôler. Le témoin surfacique peut être utilisé pour vérifier le recouvrement de la zone à contrôler. Sa taille est alors identique à la dimension de la zone à contrôler.

Le témoin surfacique est positionné précisément sur la zone de la pièce étalon correspondant aux zones des pièces à contrôler. Dans le cas de zones aveugles, l'utilisation d'un endoscope peut s'avérer nécessaire pour vérifier le positionnement du témoin surfacique. Une fois le témoin surfacique bien positionné, l'acquisition de la zone à contrôler est lancée par un opérateur. La sonde est déplacée transversalement par rapport aux lignes conductrices (voir la double flèche sur la figure 1). Une variation de l'impédance de la bobine de la sonde de mesure est enregistrée à chaque passage de ligne. Il est alors possible de s'assurer du recouvrement de la zone en vérifiant que toutes les lignes du témoin surfacique ont été enregistrées. Il est aussi possible d'utiliser les écartements connus entre les lignes pour déterminer la dimension de la zone à contrôler.

On détermine alors la trajectoire que doit suivre la sonde à courants de Foucault pour couvrir, par balayage, toute la zone recouverte par le témoin surfacique. Pour cela, on enregistre les points d'intérêt fournis par le passage successif de la sonde sur les lignes conductrices du témoin surfacique. Lorsque la sonde est passée d'un bord à l'autre du témoin, la sonde est décalée d'un pas pour parcourir un autre trajet d'un bord à l'autre du témoin.

Le témoin surfacique peut permettre aussi la vérification de l'orthogonalité de la sonde par rapport à la surface qu'elle parcourt. L'orthogonalité de la sonde permet de récupérer un signal optimal. Ceci est important pour des pièces ayant des zones à contrôler qui ne sont pas planes. Pour ce faire, le témoin surfacique est caractérisé afin de connaître la réponse attendue à chaque passage de ligne avec une sonde orthogonale au dépôt.

Pour caractériser le témoin surfacique, celui-ci est placé sur une plaque du même matériau que celui de la pièce à contrôler. La plaque équipée de témoin est positionnée sur un banc de contrôle XY. La plaque équipée du témoin est balayée au moyen d'une sonde ayant le même élément sensible que la sonde de contrôle de la machine automatique, en utilisant les mêmes paramètres. On enregistre les signaux fournis par la sonde (amplitudes et/ou phases) au passage des lignes. Le témoin surfacique peut alors être utilisé pour optimiser le positionnement de la sonde par analogie avec les résultats obtenus sur une surface plane.

La figure 2, déjà citée, est une vue partielle et en coupe d'une pièce métallique complexe 100 servant de pièce étalon. Les zones 10 et 20 de la pièce correspondent à des zones qu'il faudra contrôler sur d'autres pièces. Sur les zones 10 et 20 on dépose des témoins surfaciques respectivement 11 et 21 et on lance l'acquisition des zones 10 et 20 au moyen de la sonde à courants de Foucault 30. Les signaux obtenus suite aux variations de conductivité permettent de vérifier la trajectoire réalisée et de la corriger si nécessaire comme explicité ci-dessus. De plus une analyse plus fine, permet de vérifier le positionnement de la sonde par rapport à la surface par analogie avec les résultats obtenu lors de la caractérisation du témoin surfacique ou bien en faisant varier la position de la sonde jusqu' à obtenir une amplitude maximale sur les dépôts.

La figure 3 est illustrative de l'application du procédé de contrôle mis en place selon la présente invention sur une pièce à contrôler 100' identique à la pièce étalon 100. Les zones 10' et 20' peuvent ainsi être contrôlées par le procédé de contrôle établi par l'invention.

Des témoins surfaciques peuvent être réalisés pour chaque type de matériau contrôlé au moyen d'une sonde à courants de Foucault. Ils peuvent être produits sous forme de rouleau dont il suffit de prélever la longueur désirée. Ils sont utilisables sur tout type de surface (surface de révolution, surface plane).

## Revendications

1. Procédé de repérage de points d'intérêt sur une zone (10, 20) de la surface d'une pièce (100), comprenant la mise en contact intime sur ladite zone d'un témoin surfacique (11, 21) constitué d'une couche mince et souple (2), apte à se conformer à ladite zone pour une mise en contact intime, la couche mince supportant des traces (3) en matériau électriquement conducteur, le matériau de la couche mince (2), le matériau des traces (3), la géométrie et la répartition des traces étant choisis pour que, lorsque le témoin surfacique est en contact intime avec ladite zone, le passage d'une sonde à courants de Foucault sur une trace fournisse un signal significatif et représentatif de la trace, le procédé comprenant également le passage de la sonde à courants de Foucault (30) sur le témoin surfacique (11, 21) et le relevé des signaux représentatifs des traces et fournis par la sonde, ces signaux représentatifs correspondant à des points d'intérêt ainsi repérés sur ladite zone.

2. Procédé de mise en place d'un test de contrôle automatique d'une zone de la surface de pièces métalliques identiques au moyen d'une sonde à courants de Foucault (30), le procédé comprenant :
- le repérage, par le procédé selon la revendication 1, de points d'intérêt sur une zone (10, 20) de la surface d'une pièce métallique étalon (100), identique à la zone de surface des pièces métalliques (100') à contrôler et exempte de défauts, les points d'intérêt repérés permettant à la sonde à courants de Foucault (30) de balayer toute la zone de la pièce métallique étalon (100),
- l'enregistrement de la position des points d'intérêt repérés sur la zone (10, 20) de la surface de la pièce métallique étalon (100) afin de pouvoir procéder au contrôle automatique, au moyen d'une sonde à courants de Foucault (30), d'une pièce métallique (100') identique à contrôler par répétition du balayage réalisé sur la zone de la pièce métallique étalon.

3. Procédé de mise en place d'un test de contrôle automatique selon la revendication 2, dans lequel le repérage de points d'intérêt comprend le repérage de points de début de zone et de points de fin de zone pour déterminer la trajectoire d'une sonde à courants de Foucault (30) devant balayer toute la zone.

4. Procédé de mise en place d'un test de contrôle automatique selon la revendication 2, comprenant également l'enregistrement, pour chaque point d'intérêt repéré sur la zone de la surface de la pièce métallique étalon (100), de la position angulaire de la sonde (30) pour laquelle le signal fourni par la sonde est optimal.

5. Application du procédé selon l'une quelconque des revendications 1 à 4 au contrôle non destructif de pièces en matériau électriquement conducteur.

6. Application selon la revendication 5 pour des pièces d'appareils aéronautiques.

7. Application selon l'une des revendications 5 ou 6, dans laquelle le matériau de la couche mince (2) est en matériau isolant.

8. Application selon la revendication 7, dans laquelle le matériau isolant est un polymère fluoré est choisi parmi le polytétrafluoroéthylène (PTFE), le polymère de perfluoroalkoxy (PFA) et l'éthylène-propylène fluoré (FEP).

9. Application selon l'une quelconque des revendications 5 à 8, dans laquelle, le témoin surfacique étant destiné au repérage de points d'intérêt sur une zone électriquement conductrice de la surface de la pièce, le matériau des traces (3) est choisi pour avoir une conductivité électrique supérieure d'au moins 20 MS à celle de ladite zone.

10. Application selon l'une quelconque des revendications 5 à 9, dans laquelle le matériau des traces (3) est choisi parmi l'or, le cuivre et l'argent.

11. Application selon l'une quelconque des revendications 5 à 10, dans laquelle les traces (3) sont constituées par des lignes.

12. Application selon la revendication 11, dans laquelle les lignes (3) sont parallèles entre elles.

13. Application selon la revendication 11, dans laquelle les lignes forment un quadrillage.

14. Application selon l'une quelconque des revendications 5 à 13, dans laquelle la couche mince (2) est pourvue d'un adhésif pour une mise en contact intime avec ladite zone.

## Patentansprüche

1. Verfahren zur Ortung von Stellen von Interesse auf einem Bereich (10, 20) der Oberfläche eines Teils (100), umfassend das enge Inkontaktbringen, auf dem genannten Bereich, einer von einer dünnen und flexiblen Schicht gebildeten Flächenkontrolle (11, 21), welche geeignet ist, sich für ein enges Inkontaktbringen an den Bereich anzupassen, wobei die dünne Schicht Spuren (3) aus elektrisch leitendem Material trägt, wobei das Material der dünnen Schicht (2), das Material der Spuren (3), die Geometrie und die Verteilung der Spuren gewählt sind, damit, wenn die Flächenkontrolle mit dem Bereich in engem Kontakt ist, das Fahren einer Wirbelstromsonde über eine Spur ein aufschlussreiches und für die Spur repräsentatives Signal liefert, wobei das Verfahren auch das Fahren der Wirbelstromsonde (30) über die Flächenkontrolle (11, 21) sowie die Erfassung der für die Spuren repräsentativen und durch die Sonde gelieferten Signale umfasst, wobei diese repräsentativen Signale auf diese Weise auf dem Bereich georteten Stellen von Interesse entsprechen.

2. Verfahren zur Bereitstellung einer automatischen Kontrollprüfung eines Bereichs der Oberfläche von identischen Metallteilen mittels einer Wirbelstromsonde (30), wobei das Verfahren umfasst:
- die Ortung, durch das Verfahren nach Anspruch 1, von Stellen von Interesse auf einem Bereich (10, 20) der Oberfläche eines Mustermetallteils (100), der mit dem Oberflächenbereich der zu prüfenden Metallteile (100') identisch und frei von Fehlern ist, wobei die georteten Stellen von Interesse der Wirbelstromsonde (30) ermöglichen, den gesamten Bereich des Mustermetallteils (100) abzutasten,
- die Aufzeichnung der Position der auf dem Bereich (10, 20) der Oberfläche des Mustermetallteils (100) georteten Stellen von Interesse, um mittels einer Wirbelstromsonde (30) die automatische Prüfung eines zu prüfenden identischen Metallteils (100') durch Wiederholen der auf dem Bereich des Mustermetallteils durchgeführten Abtastung vornehmen zu können.

3. Verfahren zur Bereitstellung einer automatischen Kontrollprüfung nach Anspruch 2, wobei die Ortung von Stellen von Interesse die Ortung von Bereichsanfangsstellen und von Bereichsendstellen umfasst, um den Weg einer Wirbelstromsonde (30), die den gesamten Bereich abtasten soll, zu bestimmen.

4. Verfahren zur Bereitstellung einer automatischen Kontrollprüfung nach Anspruch 2, das für jede Stelle von Interesse, die auf dem Bereich der Oberfläche des Mustermetallteils (100) geortet wird, auch die Aufzeichnung der Winkelposition der Sonde (30), bei der das durch die Sonde gelieferte Signal optimal ist, umfasst.

5. Anwendung des Verfahrens nach einem der Ansprüche 1 bis 4, auf die zerstörungsfreie Prüfung von Teilen aus elektrisch leitendem Material.

6. Anwendung nach Anspruch 5 für Teile von Luftfahrtgeräten.

7. Anwendung nach einem der Ansprüche 5 oder 6, wobei das Material der dünnen Schicht (2) aus Isoliermaterial besteht.

8. Anwendung nach Anspruch 7, wobei das Isoliermaterial ein Fluorpolymer ist, das aus Polytetrafluorethylen (PTFE), Perfluoralkoxy-Polymer (PFA) und Fluorethylenpropylen (FEP) ausgewählt ist.

9. Anwendung nach einem der Ansprüche 5 bis 8, wobei, wenn die Flächenkontrolle zur Ortung von Stellen von Interesse auf einem elektrisch leitenden Bereich der Oberfläche des Teils bestimmt ist, das Material der Spuren (3) so gewählt ist, dass es eine elektrische Leitfähigkeit, die um wenigstens 20 MS höher als diejenige des Bereichs ist, aufweist.

10. Anwendung nach einem der Ansprüche 5 bis 9, wobei das Material der Spuren (3) aus Gold, Kupfer und Silber ausgewählt ist.

11. Anwendung nach einem der Ansprüche 5 bis 10, wobei die Spuren (3) durch Linien gebildet sind.

12. Anwendung nach Anspruch 11, wobei die Linien (3) parallel zueinander verlaufen.

13. Anwendung nach Anspruch 11, wobei die Linien ein Raster bilden.

14. Anwendung nach einem der Ansprüche 5 bis 13, wobei die dünne Schicht (2) mit einem Klebemittel für ein enges Inkontaktbringen mit dem Bereich versehen ist.

## Claims

1. A method of identifying points of interest in a region (10, 20) of the surface of a part (100), which comprises bringing a surface reference (11, 21) into intimate contact with said region, said surface reference consisting of a thin flexible film (2) capable of conforming to said region so as to be brought into intimate contact therewith, the thin film supporting tracks (3) made of electrically conductive material, the material of the thin film (2), the material of the tracks (3) and the geometry and distribution of the tracks being chosen so that, when the surface reference is in intimate contact with said region, the passage of an eddy current probe over a track delivers a significant signal representative of the track, the method also including the passage of the eddy current probe (30) over the surface reference (11, 21) and the recording of the signals representative of the tracks that are delivered by the probe, these representative signals corresponding to points of interest thus identified in said region.

2. A method of implementing an automatic check test for checking a region of the surface of identical metal parts by means of an eddy current probe (30), the method comprising:
- the identification, by the method as claimed in claim 1, of points of interest in a region (10, 20) of the surface of a standard metal part (100), which is identical to the surface region of the metal parts (100') to be tested and is free of defects, the identified points of interest allowing the eddy current probe (30) to scan the entire region of the standard metal part (100); and
- the recording of the position of the identified points of interest in the region (10, 20) of the surface of the standard metal part (100) so as to be able to automatically check, by means of an eddy current probe (30), an identical metal part (100') to be tested by repeating the scan carried out on the region of the standard metal part.

3. The method of implementing an automatic check test as claimed in claim 2, in which the identification of points of interest comprises the identification of start points in the region and of end points in the region so as to determine the path of an eddy current probe (30) that has to scan the entire region.

4. The method of implementing an automatic check test as claimed in claim 2, which also includes the recording, for each identified point of interest in the region of the surface of the standard metal part (100), of the angular position of the probe (30) for which the signal delivered by the probe is optimal.

5. Application of the method as claimed in any one of claims 1 to 4 to the nondestructive testing of parts made of electrically conductive material.

6. The application as claimed in claim 5 for parts of aeronautical machines.

7. The application as claimed in any one of claims 5 or 6, in which the material of the thin film is an insulating material.

8. The application as claimed in claim 7, in which the insulating material is a fluoropolymer chosen from polytetrafluoroethylene (PTFE), perfluoroalkoxy polymer (PFA) and fluorinated ethylene-propylene (FEP).

9. The application as claimed in any one of claims 5 to 8, wherein, when the surface reference is intended for identifying points of interest in an electrically conductive region of the surface of the part, the material of the tracks (3) is chosen to have an electrical conductivity at least 20 MS higher than that of said region.

10. The application as claimed in any one of claims 5 to 9, wherein the material of the tracks (3) is chosen from gold, copper and silver.

11. The application as claimed in any one of claims 5 to 10, wherein the tracks (3) consist of lines.

12. The application as claimed in claim 11, wherein the lines (3) are parallel to one another.

13. The application as claimed in claim 11, wherein the lines form a chequerboard grid pattern.

14. The application as claimed in any one of claims 5 to 13, wherein the thin film (2) is provided with an adhesive for bringing it into intimate contact with said region.
